# EUROPEAN PATENT APPLICATION

(11) **EP 3 498 459 A1**
(43) Date of publication of application: **19.06.2019**
(21) Application number: 18155541.8
(22) Date of filing: 07.02.2018
(51) Int. Cl.: B29C 65/00, B29C 65/02, B29C 65/04, B29C 65/06, B32B 7/04

(54) **METHOD OF CONSTRUCTING A THERMOPLASTIC COMPONENT**

(30) Priority: 14.12.2017 US 201715842248
(71) Applicant: Bell Helicopter Textron Inc., Fort Worth, TX 76101 (US)
(72) Inventor: SUTTON, Drew Alan, Georgetown, KY Kentucky 40324 (US); OLDROYD, Paul K, Azle, TX 76020 (US)
(74) Representative: Barker Brettell LLP

(57) **Abstract**

Systems and methods of constructing a thermoplastic component (120) include joining a thermoplastic skin (102) to a thermoplastic core (104) by introducing heat (108) at an interface (103, 105) of each of the thermoplastic skin (102) and the thermoplastic core (104) to at least partially melt the thermoplastic skin (102) to a thermoplastic core (104) at the interfaces(103, 105), applying pressure to at least one of the thermoplastic skin (102) and the thermoplastic core (104) to sandwich the elements, and cooling the interfaces (103, 105) below the melting point of each of the thermoplastic skin (102) and the thermoplastic core (104) to consolidate the thermoplastic skin (102) and the thermoplastic core (104) into a unitary thermoplastic component (120). An optional thermoplastic film (310) may be disposed between the thermoplastic skin (102) and the thermoplastic core (104). The thermoplastic film (310) may be joined to the thermoplastic core (104) to form an intermediate thermoplastic component (519) prior to joining the thermoplastic skin (102) to the intermediate component (519).

## Description

### Cross-Reference to Related Applications

Not applicable.

### Statement Regarding Federally Sponsored

### Research or Development

Not applicable.

### Background

Structural components in aircraft are often subjected to high forces and/or loads when in motion. In some instances, structural aircraft components are subjected to occasional impact from objects. These structural components must be designed to be lightweight while handling the forces and resisting impact damage. Accordingly, structural aircraft components are frequently constructed from a core having a matrix of adjoining hollow cells and an attached outer skin to maintain structural integrity of the components while also minimizing weight. Current systems and methods for constructing such structural aircraft components include using a fiber-reinforced thermoset skin bonded to a fiber-reinforced thermoset core. However, these thermoset components present many challenges, such as requiring complex surface preparation procedures prior to bonding, which can leave the bonds predisposed to failure if not performed properly.

### Brief Description of The Drawings

For a more complete understanding of the present disclosure and the advantages thereof, reference is now made to the following brief description, taken in connection with the accompanying drawings and detailed description.
Figure 1 is a schematic diagram of a process of joining a thermoplastic skin and a thermoplastic core having similar properties according to this disclosure.
Figure 2 is a schematic diagram of a process of joining a thermoplastic skin and a thermoplastic core having dissimilar properties according to this disclosure.
Figure 3 is a schematic diagram of a process of joining a thermoplastic skin and a thermoplastic core having similar properties using a thermoplastic film according to this disclosure.
Figure 4 is a schematic diagram of a process of joining a thermoplastic skin and a thermoplastic core having dissimilar properties using a thermoplastic film according to this disclosure.
Figure 5 is a schematic diagram of a two-step process of joining a thermoplastic skin and a thermoplastic core using a thermoplastic film according to this disclosure.
Figure 6 is a schematic diagram of another two-step process of joining a thermoplastic skin and a thermoplastic core using a thermoplastic film according to this disclosure.
Figure 7 is a schematic diagram of yet another two-step process of joining a thermoplastic skin and a thermoplastic core using a thermoplastic film according to this disclosure.
Figure 8 is a schematic diagram of a process of emulating reticulation in a thermoplastic core according to this disclosure.
Figure 9 is a schematic diagram of the emulated reticulation in a thermoplastic core according to this disclosure.
Figure 10 is an oblique view of a portion of a thermoplastic core according to this disclosure.
Figure 11 is a schematic diagram of a helicopter according to this disclosure.
Figure 12 is a schematic diagram of a tiltrotor according to this disclosure.
Figure 13 is a flowchart of a method of constructing a thermoplastic component according to this disclosure.
Figure 14 is a flowchart of another method of constructing a thermoplastic component according to this disclosure.

### DETAILED DESCRIPTION

In this disclosure, reference may be made to the spatial relationships between various components and to the spatial orientation of various aspects of components as the devices are depicted in the attached drawings. However, as will be recognized by those skilled in the art after a complete reading of this disclosure, the devices, members, apparatuses, etc. described herein may be positioned in any desired orientation. Thus, the use of terms such as "above," "below," "upper," "lower," or other like terms to describe a spatial relationship between various components or to describe the spatial orientation of aspects of such components should be understood to describe a relative relationship between the components or a spatial orientation of aspects of such components, respectively, as the device described herein may be oriented in any desired direction.

This invention relates generally to constructing a thermoplastic component. More specifically, this disclosure relates to constructing a thermoplastic component by adhering a fiber-reinforced thermoplastic skin to a fiber-reinforced thermoplastic core. Thermoplastics, by definition, rely on a phase-change when processed by melting and re-solidifying upon cooling. Thermoplastic materials begin in a first solid state that is melted into a second semi-liquid or liquid state, consolidated with another component, and then re-solidified when cooled to create a single "welded," "melt-bonded," and/or "fusion-bonded" thermoplastic component. As such, constructing a thermoplastic component in accordance with this disclosure requires melting a surface and/or surface element of each of thermoplastic skin and a thermoplastic core at an interface between the two, consolidating the skin and core at the interface via contact and/or an application of pressure, and then cooling the skin and core at the interface to create the single unitary thermoplastic component.

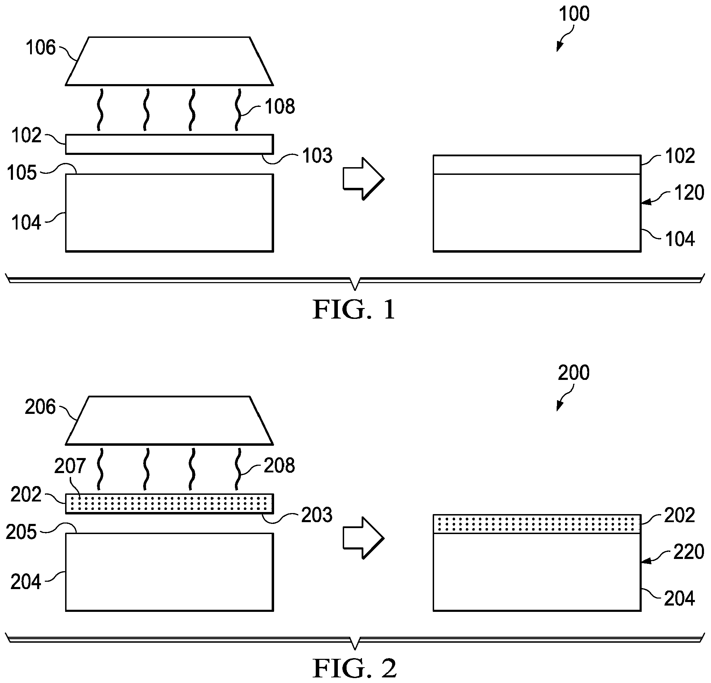

Referring now to Figure 1, a schematic diagram of a process 100 of joining a thermoplastic skin 102 and a thermoplastic core 104 having similar properties is shown according to this disclosure. Thermoplastic skin 102 and thermoplastic core 104 may generally be formed from a fiber-reinforced thermoplastic material and comprise substantially similar material properties (e.g. composition, strength, melting temperature, etc.). In this embodiment, thermoplastic skin 102 and thermoplastic core 104 comprise a substantially similar melting temperature. To begin process 100, a heat source 106 is employed to selectively apply heat 108 to an interface 103 of the thermoplastic skin 102 and/or an interface 105 of the thermoplastic core 104 to cause the thermoplastic skin 102 and the thermoplastic core 104 to melt at their respective interfaces 103, 105.

In some embodiments, heat source 106 may comprise a vibratory mechanism that selectively vibrates at least one of the thermoplastic skin 102 and the thermoplastic core 104 to generate heat 108 via friction between the interfaces 102, 104. To generate heat 108 through friction, it will be appreciated that the interfaces 103, 105 are in contact prior to the heat source 106 applying the vibration. In other embodiments, heat source 106 may be configured to generate inductive heat 108, radiant heat 108, and/or any other type of heat 108 to melt the thermoplastic skin 102 and the thermoplastic core 104 to melt at their respective interfaces 103, 105. Accordingly, in some embodiments, the interfaces 103, 105 may be in contact prior to applying the inductive, radiant, and/or other type of heat 108. However, in some embodiments, the interfaces 103, 105 may be separated prior to application of the inductive, radiant, and/or other type of heat 108.

When inductive, radiant, and/or other type of heat 108 is employed, the heat 108 may be directed onto the interfaces 103, 105 from the top, bottom, and/or sides of the thermoplastic skin 102 and/or the thermoplastic core 104 until each of the interfaces 103, 105 reaches its melting temperature. By directing the heat 108 at the interfaces 103, 105, the structure of the thermoplastic skin 102 and the thermoplastic core 104 maintain their structural integrity. The heat 108 transfers sufficient energy to bring the interfaces 103, 105 to the melting temperature and at least partially melt the thermoplastic skin 102 and the thermoplastic core 104 at their respective interfaces 103, 105. As the interfaces 103, 105 at least partially melt, the interfaces 103, 105 of the thermoplastic skin 102 and the thermoplastic core 104 undergo a phase-change from a solid to liquid. In one example, the interfaces 103, 105 may be subjected to heat 108 and begin to soften at about 360 to 380 degrees Fahrenheit. Each of the interfaces 103, 105, may continue to soften until the temperature reaches about 600 degrees Fahrenheit, at which temperature each of the interfaces 103, 105 is considered fully melted.

To reach the fully melted state of the interfaces 103, 105, the heating rate at the interfaces 103, 105 must be sufficiently rapid to ensure that the structure and stiffness of a majority of the thermoplastic skin 102 and thermoplastic core 104 retain their shapes and structural integrity such that melting only occurs at the interfaces 103, 105. Then, upon reaching the fully melted state, the thermoplastic skin 102 and the thermoplastic core 104 are consolidated by forcing the thermoplastic skin 102 and the thermoplastic core 104 into contact through gravity, pressure, and/or another external force. However, in embodiments where the thermoplastic skin 102 and thermoplastic core 104 are in contact prior to applying heat 108, the interfaces 103, 105 may consolidate automatically. Consolidation occurs when the melted interfaces 103, 105 remain in contact and re-solidify upon cooling. In some embodiments, the interfaces 103, 105 may be allowed to cool naturally at room temperature by selectively ceasing the application of heat 108 to the interfaces 103, 105. However, in some embodiments, a thermal mass having high thermal conductivity (e.g. aluminum) may be applied to the thermoplastic component 120. The thermal mass may quickly extract heat from the thermoplastic component 120, which may further retain the integrity and/or structure of thermoplastic core 104.

Upon consolidation, the interfaces 103, 105 undergo a second phase-change, changing from a liquid to a solid, re-solidifying and recrystallizing and/or reorganizing to form a single "welded" and/or "fusion-bonded" unitary thermoplastic component 120. Accordingly, the thermoplastic skin 102 and the thermoplastic core 104 are joined by the welding and/or fusion-bonding process that requires no adhesive. The interfaces 103, 105 of the thermoplastic skin 102 and the thermoplastic core 104 are simply melted, consolidated, and then cooled to form the thermoplastic component 120. By eliminating the need for adhesive to form the bond between the thermoplastic skin 102 and the thermoplastic core 104, costly and complex surface preparation procedures necessary in bonding thermoset components are eliminated. Further, the reticulation formed by thermoset components is also emulated through process 100. Additionally, it will be appreciated that fiber-reinforced thermoplastic components 120 exhibit improved damage tolerance, better strength after impact, and other structurally desirable characteristics as compared to most current thermoset components.

Referring now to Figure 2, a schematic diagram of a process 200 of joining a thermoplastic skin 202 and a thermoplastic core 204 having dissimilar properties is shown according to this disclosure. Process 200 may be substantially similar to process 100 and used to join thermoplastic skin 202 to thermoplastic core 204 to form a thermoplastic component 220 in a substantially similar manner to process 100. However, thermoplastic skin 202 comprises dissimilar properties from thermoplastic core 204. In some embodiments, thermoplastic skin 202 comprises a fiber-reinforced thermoplastic material having a slightly lower melting temperature than the thermoplastic core 204. Accordingly, when heat 208 is applied from heat source 206, interface 203 of the thermoplastic skin 202 reaches its melting temperature prior to interface 205 reaching its melting temperature.

In some embodiments, thermoplastic skin 202 may generally be formed from a fiber-reinforced thermoplastic material that is impregnated with a constituent 207 that enhances heat transfer between the heat source 206 and the thermoplastic skin 202. Constituent 207 comprises an interspersed metallic component and/or other material component that enhances heat transfer by more readily responding to inductive, radiant, and other type of heat 208. Accordingly, when heat 208 is applied from heat source 206, constituent 207 allows the interface 203 of the thermoplastic skin 202 to reach its melting temperature prior to the interface 205 of the thermoplastic core 204 reaching its melting temperature. The material of the thermoplastic skin 202 may be selected, designed, and/or otherwise impregnated with constituent 207 such that the interface 203 of the thermoplastic skin 202 reaches its melting temperature just prior to that of the interface 205 of the thermoplastic core 204. This lowers the risk of the thermoplastic core 204 receiving too much heat 208, thereby protecting and preserving the structural integrity of the thermoplastic core 204 when heat 208 is applied to join the thermoplastic skin 202 and the thermoplastic core 204.

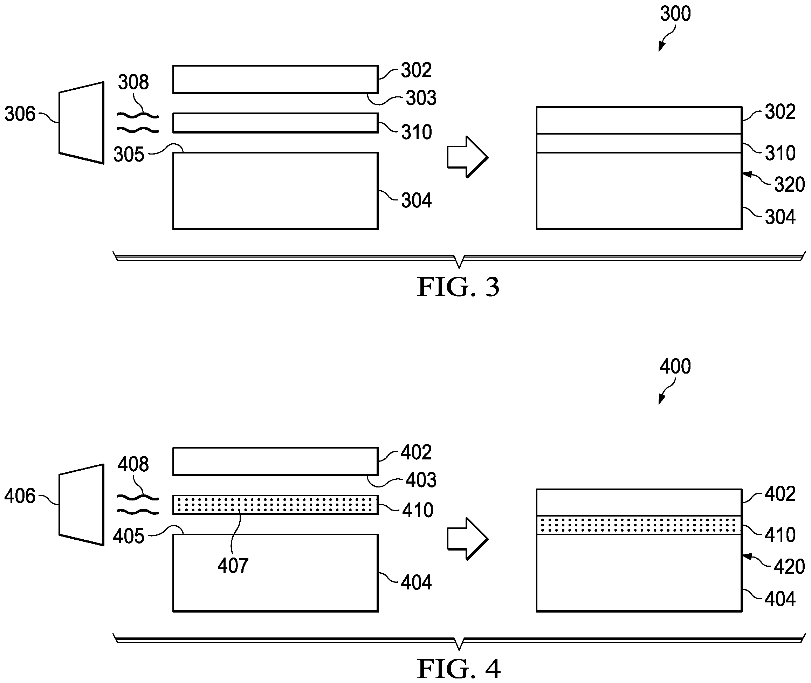

Referring now to Figure 3, a schematic diagram of a process 300 of joining a thermoplastic skin 302 and a thermoplastic core 304 having similar properties using a thermoplastic film 310 is shown according to this disclosure. Process 300 may be substantially similar to process 100 and used to join thermoplastic skin 302 to thermoplastic core 304 to form a thermoplastic component 320 in a substantially similar manner to process 100. However, process 300 utilizes thermoplastic film 310 disposed between interfaces 303, 305 of the thermoplastic skin 302 and thermoplastic core 304 and configured to join the thermoplastic skin 302 and the thermoplastic core 304 to form the thermoplastic component 320. In some embodiments, thermoplastic film 310 comprises a thermoplastic material comprising a substantially similar melting temperature to that of the thermoplastic skin 302 and thermoplastic core 304. However, in some embodiments, thermoplastic film 310 comprises a thermoplastic material comprising a slightly lower melting temperature than the thermoplastic skin 302 and thermoplastic core 304.

To join the thermoplastic skin 302 to the thermoplastic core 304, heat 308 may be directed to the thermoplastic film 310 while also directed heat 308 to the interfaces 303, 305. When fully melted, the thermoplastic film 310 may flow between the at least partially melted interfaces 303, 305. The thermoplastic skin 310 may be sandwiched between the thermoplastic skin 302 and the thermoplastic core 104 by forcing the thermoplastic skin 102 and the thermoplastic core 104 into contact through gravity, pressure, and/or another external force. Upon cooling, the thermoplastic film 310 joins the thermoplastic skin 102 and the thermoplastic core 104 by the welding and/or fusion-bonding provided by the thermoplastic film 310, thereby forming the thermoplastic component 320. Similarly to processes 100, process 300 eliminates the need for adhesive and the costly and complex surface preparation procedures necessary in bonding thermoset components.

Referring now to Figure 4, a schematic diagram of a process 400 of joining a thermoplastic skin 402 and a thermoplastic core 404 having dissimilar properties using a thermoplastic film 410 is shown according to this disclosure. Process 400 may be substantially similar to process 300 and used to join thermoplastic skin 402 to thermoplastic core 404 to form a thermoplastic component 420 in a substantially similar manner to process 300. However, thermoplastic film 410 comprises dissimilar properties from thermoplastic skin 402 and thermoplastic core 404. In some embodiments, thermoplastic film 410 comprises a fiber-reinforced thermoplastic material, the thermoplastic portion having a lower melting temperature than the thermoplastic skin 402 and thermoplastic core 404. Accordingly, when heat 408 is applied from heat source 406, thermoplastic film 410 reaches its melting temperature prior to interfaces 403, 405 reaching their melting temperatures.

In some embodiments, thermoplastic film 410 may generally be formed from a fiber-reinforced thermoplastic material that is impregnated with a constituent 407 substantially similar to constituent 207 that enhances heat transfer between the heat source 406 and the thermoplastic film 410. Constituent 407 may comprise an interspersed metallic component and/or other material component that enhances heat transfer by more readily responding to inductive, radiant, and other type of heat 408. However, in some embodiments, constituent 407 may be configured to react to an induced electromagnetic field (EMF). Accordingly, when heat 408 is applied from heat source 406, constituent 407 allows the thermoplastic film 410 to reach its melting temperature prior to the interfaces 403, 405 reaching its melting temperature. The material of the thermoplastic film 410 may therefore be selected, designed, and/or otherwise impregnated with constituent 407 such that the thermoplastic film 410 reaches its melting temperature just prior to that of the interfaces 403, 405. This lowers the risk of the thermoplastic skin 402 and the thermoplastic core 404 receiving too much heat 408, thereby protecting and preserving the structural integrity of the thermoplastic core 404 when heat 408 is applied to join the thermoplastic skin 202 and the thermoplastic core 404 and form the thermoplastic component 420.

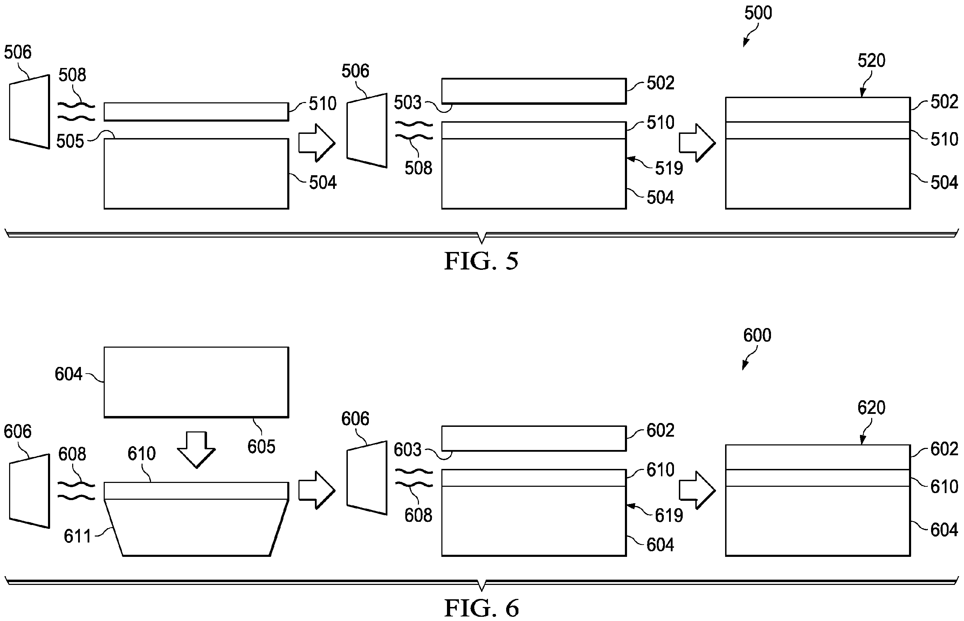

Referring now to Figure 5, a schematic diagram of a two-step process 500 of joining a thermoplastic skin 502 and a thermoplastic core 504 using a thermoplastic film 510 is shown according to this disclosure. Process 500 may be substantially similar to processes 300, 400 and used to join thermoplastic skin 502 to thermoplastic core 504 to form a thermoplastic component 520 in a substantially similar manner to processes 300, 400. However, process 500 involves multiple steps to form the thermoplastic component 520. In a first step, heat 508 is applied by the heat source 506 to the thermoplastic film 510 and interface 505 of the thermoplastic core 504, whereby the thermoplastic film 510 is joined to the thermoplastic core 504 in accordance with techniques described in this disclosure to form an intermediate thermoplastic component 519. In a second step, heat 508 is applied to the thermoplastic film 510 and interface 503 of the thermoplastic skin 502, whereby the thermoplastic skin 502 is joined to the intermediate thermoplastic component 519 in accordance with techniques described in this disclosure to form the thermoplastic component 520.

Referring now to Figure 6, a schematic diagram of another two-step process 600 of joining a thermoplastic skin 602 and a thermoplastic core 604 using a thermoplastic material 610 is shown according to this disclosure. Process 600 may be substantially similar to process 500 and used to join thermoplastic skin 602 to thermoplastic core 604 to form a thermoplastic component 620 in a substantially similar manner to process 500. However, in a first step of process 600, thermoplastic core 604 is dipped into a melted, liquid-state thermoplastic material 610. In some embodiments, thermoplastic material 610 may be carried by a vessel 611 and melted by applying heat 608 from heat source 606. However, in other embodiments, vessel 611 may be heated by the heat source 606 to melt the thermoplastic material 610 prior to dipping the thermoplastic core 604 into the melted thermoplastic material 610. When the thermoplastic core 604 is dipped into the melted thermoplastic material 610, the interface 605 of the thermoplastic core 604 is coated with the melted thermoplastic material 610, and when cooled, the thermoplastic core 604 and the thermoplastic material 610 form intermediate thermoplastic component 619. Thus, similarly to process 500, in a second step of process 600, heat 608 is applied to the thermoplastic material 610 and interface 603 of the thermoplastic skin 602, whereby the thermoplastic skin 602 is joined to the intermediate thermoplastic component 619 in accordance with techniques described in this disclosure to form the thermoplastic component 620.

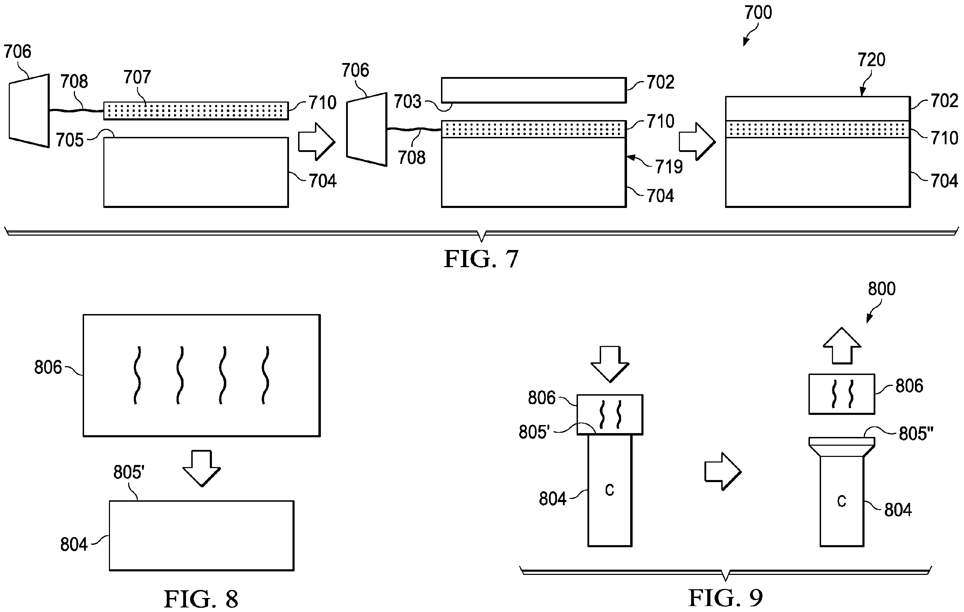

Referring now to Figure 7, a schematic diagram of yet another two-step process 700 of joining a thermoplastic skin 702 and a thermoplastic core 704 using a thermoplastic film is shown according to this disclosure. Process 700 may be substantially similar to process 400, 500 and used to join thermoplastic skin 702 to thermoplastic core 704 to form a thermoplastic component 720 in a substantially similar manner to processes 400, 500. However, thermoplastic film 710 is formed from a fiber-reinforced thermoplastic material that comprises constituent 707. Constituent 707 may comprise an interspersed electrically conductive and/or resistive component and be configured to conduct electrical current to induce heat 708 into the thermoplastic skin 710. When a current is applied to the thermoplastic skin 710 by the heat source 706, the constituents 707 in the thermoplastic skin generate sufficient heat to melt the thermoplastic skin 710.

Accordingly, in a first step of process 700, the thermoplastic skin 710 is joined to the thermoplastic core 704 to form an intermediate thermoplastic component 719. In a second step of process 700, the thermoplastic skin 702 is joined to the intermediate thermoplastic component 719. However, in alternative embodiments, the thermoplastic skin 702 and the thermoplastic core 704 may be joined in a single step substantially similar to process 400. The material of the thermoplastic film 710 may therefore be selected, designed, and/or otherwise impregnated with constituent 707 such that the thermoplastic film 710 reaches its melting temperature just prior to that of the interfaces 703, 705. This lowers the risk of the thermoplastic skin 702 and the thermoplastic core 704 receiving too much heat 708, thereby protecting and preserving the structural integrity of the thermoplastic core 704 when heat 708 is applied to the interfaces 703, 705 to join the thermoplastic skin 702 and the thermoplastic core 704 and form the thermoplastic component 720.

Referring now to Figures 8 and 9, a schematic diagram of a process 800 of emulating reticulation in a thermoplastic core 804 and a schematic diagram of the emulated reticulation in a thermoplastic core 804 are shown, respectively, according to this disclosure. Process 800 comprises employing a heat source 806 having a flat and/or other complementary-shaped surface and raising the surface temperature above a melting temperature of the thermoplastic core 804. The heat source 806 is selectively moved into contact with an interface 805' of the thermoplastic core 804. Pressure is then applied to the thermoplastic core 804 by the heat source 806 to heat the thermoplastic core 804 at the interface 805', thereby at least partially melting the interface 805' of the thermoplastic core 804. As pressure is applied to the melted interface 805', the edges of the interface 805' are slightly crushed, smashed, and/or otherwise deformed, while the remainder of the thermoplastic core 804 maintains its structural integrity. In some embodiments, interface 805' may be smashed about 0.5 to about 1.0 millimeters. The interface 805' may then be cooled, and pressure from the heat source 806 is relieved as the heat source 806 is removed from contact with the thermoplastic core 804, and the result of the deformation of the interface 805' is a compressed interface 805" that comprises a larger surface area as compared to the uncrushed interface 805'. As such, it will be appreciated that compressed interface 805" may be formed via crushing, folding, deforming, causing an accordion-like collapsing, twisting, and/or any other natural deformative process caused by the application of heat and pressure. Furthermore, it will be appreciated that increased amount of heat and/or pressure may result in an increased surface area of the compressed interface 805", and heat and pressure may be controlled to produce a compressed interface 805" having a specific surface area across the thermoplastic core 804.

The compressed interface 805" thereby emulates the reticulation caused by surface tension in current thermoset components that employ adhesive between a skin and core and/or aluminum crushed core components. Thus, only the interface 805' is compressed to form the compressed interface 805", while the remainder of the thermoplastic core 804 retains its structural integrity. Further, it will be appreciated that thermoplastic core 804 may be representative of thermoplastic cores 104, 204, 304, 404, 504, 607, 704. Additionally, the compressed interface 805" creates a larger footprint than other non-crushed portions of the thermoplastic core 804 for an increased surface contact area between the thermoplastic core 804 and a subsequent thermoplastic skin 102, 202, 302, 402, 502, 602, 702 that may be joined thereto. The compressed interface 805" created by process 800 thus strengthens the joint between a thermoplastic core 104, 204, 304, 404, 504, 604, 704, 804 and a thermoplastic skin 102, 202, 302, 402, 502, 602, 702 and/or an optional thermoplastic film 310, 410, 510, 610, 710. Accordingly, process 800 may be used prior to any of processes 100, 200, 300, 400, 500, 600, 700 to form a compressed interface 805" on the thermoplastic cores 104, 204, 304, 404, 504, 607, 704.

Furthermore, while processes 100, 200, 300, 400, 500, 600, 700, 800 are described in terms of applying a single thermoplastic skin 102, 202, 302, 402, 502, 602, 702 to a thermoplastic core 104-804, it will be appreciated that multiple thermoplastic skins 102, 202, 302, 402, 502, 602, 702 and/or thermoplastic films 310, 410, 510, 610, 710 may be applied to a thermoplastic core 104, 204, 304, 404, 504, 607, 704, 804. Further it will be appreciated that multiple thermoplastic skins 102, 202, 302, 402, 502, 602, 702 and/or thermoplastic films 310, 410, 510, 610, 710 to substantially encapsulate the thermoplastic core 104, 204, 304, 404, 504, 604, 704, 804 to form a thermoplastic component 120, 220, 320, 420, 520, 620, 720.

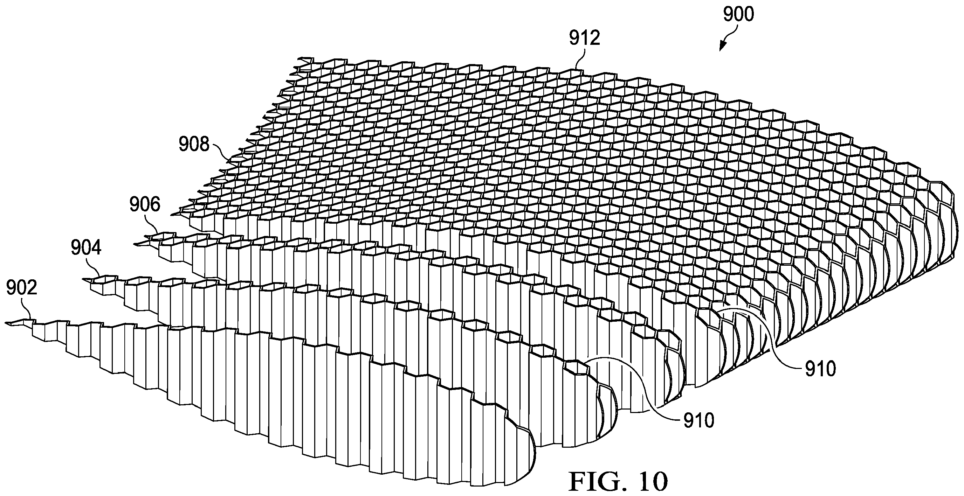

Referring now to Figure 10, an oblique view of a portion of a thermoplastic core 900 is shown according to this disclosure. Thermoplastic core 900 is generally formed from a plurality of thin thermoplastic components 902, 904, 906, 910 to form a matrix of adjoining and adjacently-disposed hollow cells 910 comprising an interface 912 substantially similar to interfaces 105, 205, 305, 405, 505, 605, 705, 805' and can be used in process 800 to form a compressed interface 805". Thermoplastic core 900 generally comprises honeycomb-shaped cells 910. However, in other embodiments, thermoplastic core 900 may comprise any other shaped (e.g. round, rectangular, octagonal) cells 910. Thermoplastic core 900 generally comprises a large cell thermoplastic core (LCTC) that is representative of thermoplastic cores 104, 204, 304, 404, 504, 604, 704, 804 used to construct thermoplastic components 120, 220, 320, 420, 520, 620, 720. Large cells 910 afford the thermoplastic core 900 increased performance characteristics to shear energy as opposed to small cell cores. Large cells 910 in thermoplastic core 900 also allow the structural response of the thermoplastic component 120, 220, 320, 420, 520, 620, 720 to be tailored to a specific application and optimizes energy transfer between skins 102, 202, 302, 402, 502, 602, 702. Additionally, large cells 910 increase the importance of reticulation in the cell, thereby forming a compressed interface 805" on interface 912 is imperative to optimizing performance. However, it will be appreciated that the size and shape of the thermoplastic components 902, 904, 906, 908 and/or the cells 910 may be selected based on a specific application.

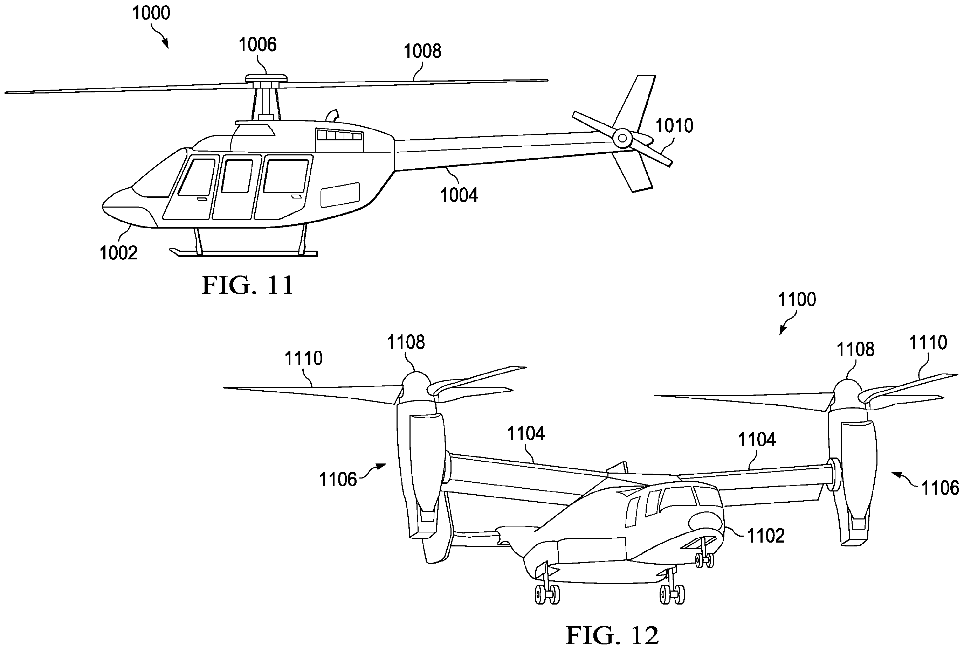

Referring now to Figure 11, a schematic diagram of a helicopter 1000 is shown according to this disclosure. Helicopter 1000 comprises a fuselage 1002, an empennage 1004 having a tail rotor 1010, and a rotor system 1006 comprising a plurality of rotor blades 1008. It will be appreciated that processes 100-800 may be used to form a thermoplastic component 120, 220, 320, 420, 520, 620, 720 that may be used in the fuselage 1002, empennage 1004, rotor blades 1008, and/or tail rotor 1010 of helicopter 1000.

Referring now to Figure 12, a schematic diagram of a tiltrotor 1100 is shown according to this disclosure. Tiltrotor 1100 comprises a fuselage 1102 with attached wings 1104. Pylons 1106 are disposed at the outboard ends of the wings 1104 and are rotatable between a helicopter mode (shown) and a forward-flight airplane mode (not shown). Each pylon 1106 comprises a rotor system 1108 comprising a plurality of rotor blades 1110. It will be appreciated that processes 100-800 may be used to form a thermoplastic component 120, 220, 320, 420, 520, 620, 720 that may be used in the fuselage 1102, wings 1104, and/or rotor blades 1110 of tiltrotor 1100.

Furthermore, in some embodiments, processes 100, 200, 300, 400, 500, 600, 700, 800 may be used to construct components 120, 220, 320, 420, 520, 620, 720 of military vehicles and sea craft, commercial and/or residential buildings, and/or any other structures or components. The large cell thermoplastic core 900 used to form thermoplastic components 120, 220, 320, 420, 520, 620, 720 comprises increased strength both before and after impact as compared to thermoset components. Further, the large cell thermoplastic core 900 used to form thermoplastic components 120, 220, 320, 420, 520, 620, 720 will not propagate in high cycle fatigue applications. As such, the thermoplastic components 120, 220, 320, 420, 520, 620, 720 may be used in high-energy dissipating materials or structures that are prone to impact such as leading edges of rotor blades 1008, 1110, tail rotors 1010, and wings 1104, other flight control surfaces of a helicopter 1000, tiltrotor 1110 and/or other aircraft, and/or a fuselage 1002, 1102 of an aircraft 1000, 1100 that are subject to impact damage.

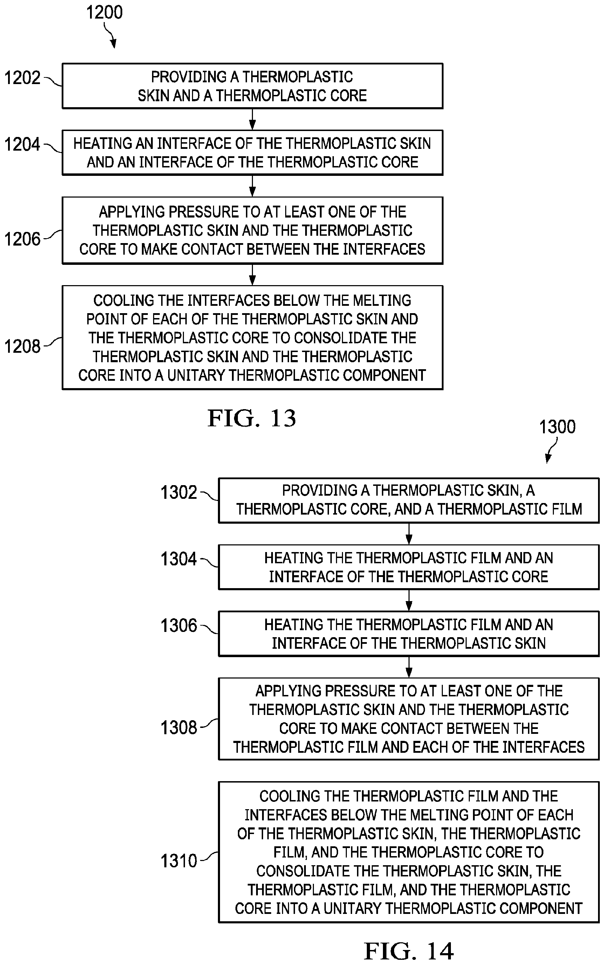

Referring now to Figure 13, a flowchart of a method 1200 of constructing a thermoplastic component 120, 220, 320, 420, 520, 620, 720 is shown according to this disclosure. Method 1200 begins at block 1202 by providing a thermoplastic skin 102, 202, 302, 402, 502, 602, 702 and a thermoplastic core 104, 204, 34, 404, 504, 604, 704, 804. Method 1200 continues at block 1204 by heating an interface 103, 203, 303, 403, 503, 603, 703 of the thermoplastic skin 102, 202, 302, 402, 502, 602, 702 and an interface 105, 205, 305, 405, 505, 605, 705, 805" of the thermoplastic core 104, 204, 304, 404, 504, 604, 704, 804. Method 1200 continues at block 1206 by applying pressure to at least one of the thermoplastic skin and the thermoplastic core to make contact between the interfaces 103, 203, 303, 403, 503, 603, 703, and 105, 205, 305, 405, 505, 605, 705, 805". Method 1200 concludes at block 1208 by cooling the interfaces 103, 203, 303, 403, 503, 603, 703 and 105, 205, 305, 405, 505, 605, 705, 805" below the melting point of each of the thermoplastic skin 102, 202, 302, 402, 502, 602, 702 and the thermoplastic core 104, 204, 304, 404, 504, 604, 704, 804 to consolidate the thermoplastic skin 102, 202, 302, 402, 502, 602, 702 and the thermoplastic core 104, 204, 304, 404, 504, 604, 704, 804 into a unitary thermoplastic component 120, 220, 320, 420, 520, 620, 720.

Referring now to Figure 14, a flowchart of another method 1300 of constructing a thermoplastic component is shown according to this disclosure. Method 1300 begins at block 1302 by providing a thermoplastic skin 102, 202, 302, 402, 502, 602, 702, a thermoplastic core 104, 204, 304, 404, 504, 604, 704, 804, and a thermoplastic film 310-710. Method 1300 continues at block 1304 by heating the thermoplastic film 310, 410, 510, 610, 710 and an interface 105, 205, 305, 405, 505, 605, 705, 805" of the thermoplastic core 104, 204, 304, 404, 504, 604, 704, 804. Method 1300 continues at block 1306 by heating the thermoplastic film 310, 410, 510, 610, 710 and an interface 103, 203, 303, 403, 503, 603, 703 of the thermoplastic skin 102, 202, 302, 402, 502, 602, 702. In some embodiments, the thermoplastic film 310, 410, 510, 610, 710 and the interface 105, 205, 305, 405, 505, 605, 705, 805" of the thermoplastic core 104, 204, 304, 404, 504, 604, 704, 804 may be cooled prior to continuing at block 1306. However, in other embodiments, blocks 1304 and 1306 may be accomplished simultaneously.

Method 1300 continues as block 1308 by applying pressure to at least one of the thermoplastic skin 102, 202, 302, 402, 502, 602, 702 and the thermoplastic core 104, 204, 304, 404, 504, 604, 704, 804 to make contact between the thermoplastic film 310, 410, 510, 610, 710 and each of the interfaces 103, 203, 303, 403, 503, 603, 703 and 105, 205, 305, 405, 505, 605, 705, 805". Method 1300 concludes at block 1310 by cooling the thermoplastic film 310, 410, 510, 610, 710 and the interfaces 103, 203, 303, 403, 503, 603, 703 and 105, 205, 305, 405, 505, 605, 705, 805" below the melting point of each of the thermoplastic skin 102, 202, 302, 402, 502, 602, 702, the thermoplastic film 310, 410, 510, 610, 710, and the thermoplastic core 104, 204, 304, 404, 504, 604, 704, 804 to consolidate the thermoplastic skin 102, 202, 302, 402, 502, 602, 702, the thermoplastic film 310, 410, 510, 610, 710, and the thermoplastic core 104, 204, 304, 404, 504, 604, 704, 804 into a unitary thermoplastic component 120, 220, 320, 420, 520, 620, 720.

At least one embodiment is disclosed, and variations, combinations, and/or modifications of the embodiment(s) and/or features of the embodiment(s) made by a person having ordinary skill in the art are within the scope of this disclosure. Alternative embodiments that result from combining, integrating, and/or omitting features of the embodiment(s) are also within the scope of this disclosure. Where numerical ranges or limitations are expressly stated, such express ranges or limitations should be understood to include iterative ranges or limitations of like magnitude falling within the expressly stated ranges or limitations (e.g., from about 1 to about 10 includes, 2, 3, 4, etc.; greater than 0.10 includes 0.11, 0.12, 0.13, etc.). For example, whenever a numerical range with a lower limit, Rₗ, and an upper limit, Rᵤ, is disclosed, any number falling within the range is specifically disclosed. In particular, the following numbers within the range are specifically disclosed: R=Rₗ +k * (Rᵤ-Rₗ), wherein k is a variable ranging from 1 percent to 100 percent with a 1 percent increment, i.e., k is 1 percent, 2 percent, 3 percent, 4 percent, 5 percent,...50 percent, 51 percent, 52 percent,..., 95 percent, 96 percent, 95 percent, 98 percent, 99 percent, or 100 percent. Moreover, any numerical range defined by two R numbers as defined in the above is also specifically disclosed.

Use of the term "optionally" with respect to any element of a claim means that the element is required, or alternatively, the element is not required, both alternatives being within the scope of the claim. Use of broader terms such as comprises, includes, and having should be understood to provide support for narrower terms such as consisting of, consisting essentially of, and comprised substantially of. Accordingly, the scope of protection is not limited by the description set out above but is defined by the claims that follow, that scope including all equivalents of the subject matter of the claims. Each and every claim is incorporated as further disclosure into the specification and the claims are embodiment(s) of the present invention. Also, the phrases "at least one of A, B, and C" and "A and/or B and/or C" should each be interpreted to include only A, only B, only C, or any combination of A, B, and C.

## Claims

1. A method of constructing a thermoplastic component, comprising:
providing a thermoplastic skin and a thermoplastic core;
heating an interface of the thermoplastic skin and an interface of the thermoplastic core;
applying pressure to at least one of the thermoplastic skin and the thermoplastic core to make contact between the interfaces;
cooling the interfaces below a melting point of each of the thermoplastic skin and the thermoplastic core to consolidate the thermoplastic skin and the thermoplastic core into a unitary thermoplastic component.

2. The method of claim 1, wherein the heating the interfaces is accomplished by vibrating at least one of the thermoplastic skin and a thermoplastic core to induce friction between the interfaces.

3. The method of claim 1, wherein the heating the interfaces is accomplished by at least one of inductive heat and radiant heat.

4. The method of claim 1 or of claim 2 or of claim 3, wherein the thermoplastic skin and a thermoplastic core comprise a substantially similar melting temperature.

5. A method of constructing a thermoplastic component, comprising:
providing a thermoplastic skin, a thermoplastic core, and a thermoplastic film;
heating the thermoplastic film and an interface of the thermoplastic core;
heating the thermoplastic film and an interface of the thermoplastic skin;
applying pressure to at least one of the thermoplastic skin and the thermoplastic core to make contact between the thermoplastic film and each of the interfaces;
cooling the thermoplastic film and the interfaces below the melting point of each of the thermoplastic skin, the thermoplastic film, and the thermoplastic core to consolidate the thermoplastic skin, the thermoplastic film, and the thermoplastic core into a unitary thermoplastic component.

6. The method of claim 1 or of any of claims 2 to 4, wherein the thermoplastic skin is impregnated with a constituent configured to enhance heat transfer of the thermoplastic skin; or
the method of claim 5, wherein the thermoplastic film is impregnated with a constituent configured to enhance heat transfer of the thermoplastic film.

7. The method of claim 6 as it depends directly or indirectly from claim 1, wherein the thermoplastic skin comprises a lower melting temperature than the thermoplastic core; or
the method of claim 6 as it depends from claim 5, wherein the thermoplastic film comprises a lower melting temperature than each of the thermoplastic skin and the thermoplastic core.

8. The method of claim 1 or of claim 5, or of any preceding claim, further comprising: at least partially crushing the interface of the thermoplastic core with a heated apparatus to form an at least partially crushed, reticulated interface comprising an increased surface area for contact with the thermoplastic skin with respect to the remainder of the thermoplastic core.

9. The method of claim 1, or of claim 5 or of any preceding claim, wherein the thermoplastic core comprises a large cell thermoplastic core (LCTC).

10. The method of claim 1 or of claim 5 or of any preceding claim, wherein the thermoplastic component forms at least a portion of at least one of a fuselage, an empennage, a tail rotor, a rotor blade, and a wing of an aircraft.

11. The method of claim 5 or of any preceding claim dependent directly or indirectly from claim 5, wherein the heating the thermoplastic film and an interface of the thermoplastic core occurs simultaneously with the heating the interface of the thermoplastic skin.

12. The method of claim 5 or of any preceding claim dependent directly or indirectly from claim 5, further comprising: cooling the thermoplastic film and the interface of the thermoplastic core to form an intermediate thermoplastic component prior to heating the thermoplastic skin.

13. The method of claim 5 or of any preceding claim dependent directly or indirectly from claim 5, wherein the heating the interface of the thermoplastic core is accomplished by dipping the interface of the thermoplastic core into a melted, liquid phase thermoplastic film.

14. The method of claim 6, wherein the constituent is configured to respond to at least one of radiant heat and an electrical current.

15. The method of claim 6, wherein the constituent is configured to respond to an induced electromagnetic field (EMF).
